## Europäisches Patentamt

## European Patent Office

## Office européen des brevets

(19)

(11) Veröffentlichungsnummer: **0 043 418**
**B2**

(12) **NEUE EUROPÄISCHE PATENTSCHRIFT**

(45) Veröffentlichungstag der neuen Patentschrift:
27.12.89

(51) Int. Cl.⁴: **A 01 K 7/06**

(21) Anmeldenummer: **81103272.1**

(22) Anmeldetag: **30.04.81**

(54) **Tränkebecken für Tiere.**

(30) Priorität: **04.07.80 DE 3025365**

(43) Veröffentlichungstag der Anmeldung:
**13.01.82 Patentblatt 82/2**

(45) Bekanntmachung des Hinweises auf die Patenterteilung:
**16.10.85 Patentblatt 85/42**

(45) Bekanntmachung des Hinweises auf die Entscheidung
über den Einspruch:
**27.12.89 Patentblatt 89/52**

(84) Benannte Vertragsstaaten:
**AT BE CH FR IT LI NL**

(56) Entgegenhaltungen:
**DE-A-1 607 200**
**DE-A-2 854 495**
**DE-B-1 030 613**
**DE-B-1 152 283**
**GB-A-677 943**
**GB-A-1 070 888**

**Prospekt "La Buvette-Ferkettränke BALKO"**
**Prospekt Suevia Haiges Nr 104-8/74, Suevia-Soger**

(73) Patentinhaber: **SUEVIA HAIGES GMBH & CO.,**
**Postfach 1108 Max- Eyth- Strasse, D-7125**
**Kirchheim/Neckar (DE)**

(72) Erfinder: **Haiges, Adolf, Hölderlinstrasse 10, D-7124**
**Bönnigheim (DE)**

(74) Vertreter: **Wolff, Michael, Dipl.- Phys.,**
**Kirchheimer Strasse 69, D-7000 Stuttgart 75 (DE)**

EP 0 043 418 B2

LIBER, STOCKHOLM 1989

2

## Beschreibung

Die Erfindung betrifft ein Tränkebecken für Tiere, gemäß Oberbegriff des Anspruches 1.

Das aus der DE-B-1 030 613 vorbekannt gewesene Viehselbsttränkebecken dieser Art löst zwar im Gegensatz zu dem aus der GB-A-677 943 vorbekannt gewesenen Tränkebecken für Tiere die Aufgabe einer erleichterten Formgebung des Beckens mit Rückwand und Ansatz unter Materialeinsparung; Es hat jedoch den Nachteil, daß sein mittels eines klappenartigen Ventilbetätigungshebels (5) steuerbares Auslaufventil (4) eine Abdichtung gegen den zu seiner Aufnahme vorgesehenen Durchbruch im Boden der Schale (8) benötigt und durch diese Dichtung infolge deren Alterung Wasser aus der Schale herauslaufen kann, das dann nicht nur in der Schale fehlt, sondern auch noch den Stallboden näßt.

Der Erfindung liegt daher die Aufgabe zugrunde, ein Tränkebecken für Tiere zu schaffen, welches bei erleichterter Formgebung des Beckens mit Rückwand und Ansatz unter Materialeinsparung im Bereich seiner Wasserschale Durchbrüche zum Lagern eines Auslaufventiles nicht aufweist, um den genannten Nachteil zu vermeiden.

Diese Aufgabe ist bei einem Tränkebecken der im Oberbegriff des Anspruches 1 genannten Art erfindungsgemäß durch dessen kennzeichnende Merkmale gelöst.

Dadurch wird nicht nur die Nebenbedingung einer erleichterten Formgebung des Beckens mit Rückwand und Ansatz unter Materialeinsparung erfüllt, sondern vorteilhafterweise auch erreicht, daß das als Auslaufventil auszubildende Sperrventil keinen Lagerdurchbruch der Beckenschale erfordert und die beiden Lagerdurchbrüche an den zwei auszubohrenden Ansatzstellen für den das Sperrventil aufhängenden Leitungsabschnitt nicht die Wandung der Wasserschale durchbrechen, die mithin vollkommen wasserdicht ist und bleibt.

Der Prospekt "La Buvette-Ferkeltränke BALKO" offenbart ein ähnliches Tränkebecken für Tiere, bei welchem aber zur Beckenbefestigung seitlich an der Beckenrückwand angebrachte, mit Befestigungsdurchbrüchen versehene Laschen vorhanden sind, die in derselben Richtung wie die übrigen Beckenteile von dem formgebenden Teil entformbar sind, was für die Befestigungsdurchbrüche selbst fraglich ist; und bei welchem außerdem der obere, waagrechte Ansatzschenkel eine nicht konstante Materialstärke aufweist, die der Materialstärke des unteren, schrägen Ansatzschenkels folglich nicht gleich ist. Es kommt bei dem Tränkebecken "BALKO" hinzu, daß der am einzigen Lagerdurchbruch des Ansatzes in dessen oberen Schenkel aufgenommene Abschnitt der Wasserzuleitung einschließlich Sperrventil und nach unten anschließendem Ventilbetätigungsrohr im Beckendurchbruch nicht mittels einer Klemmschraube radial arretiert, sondern mittels einer Verschraubung axial gesichert ist. Infolgedessen ist das Auswechseln eines defekten Ventiles erst nach Abnahme des Tränkebeckens von der es tragenden Wand möglich, da die Angriffsflächen für Werkzeuge unterhalb des oberen Ansatzschenkels in dem Ansatzhohlraum eingeschlossen und oberhalb dieses waagrechten Ansatzschenkels zu nahe an der Stahlwand gelegen sind. Im Vergleich damit sichert beim erfindungsgemäßen Tränkebecken der durchbohrte Ansatz wegen des Abstandes seiner beiden fluchtenden Durchbrüche voneinander eine stabile Lage des aufgenommenen Leitungsabschnittes, der vorzugsweise ein Einzelteil ist, beispielsweise aber auch das Ende einer längeren stationären Wasserzuleitung sein kann, wobei jedenfalls das Ventil unter dem Ansatz des Beckens von dessen Vorderseite her wie die Klemmschraube ohne weiteres erreichbar ist. Bei bevorzugten Ausführungsformen des erfindungsgemäßen Tränkebeckens weist der Grund der Schale an der Rückwand eine Erhebung auf, die auf an sich aus der DE-B-1 152 283 bekannte Weise eine Rinne für stehendes Lockwasser abteilt, welche so gestaltet ist, daß das Becken geradlinig entformbar ist.

Bei den bevorzugten Ausführungsformen ist die Lagerstelle für die Klemmschraube gewindelos und zwischen den Ansatzschenkeln eine am Ansatz befestigte Mutter als Gewindeträger vorgesehen, sodaß das teure Schneiden eines Innengewindes entfällt. Alternativ könnte die Lagerstelle aber auch mit einem Innengewinde versehen werden.

Bei den bevorzugten Ausführungsformen ist der von den Lagerdurchbrüchen aufgenommene Leitungsabschnitt wie erwähnt ein Einzelteil, das mit einer stationären Wasserzuleitung oberhalb des Ansatzes verschraubbar ist. Infolgedessen braucht das Tränkebecken einschließlich festgeklemmtem Leitungsabschnitt nur noch mittels desselben mit der Wasserzuleitung verbunden zu werden. Außerdem entfällt eine besondere Lagerung des Ventils an der Rückwand.

Durch mindestens einen hohlen Nocken, der zur Lagerung des Ventils oder eines Betätigungsorgans desselben an der Rückwand ins Beckeninnere vorspringend ausgebildet ist, kann ohne Erschwernis der Beckenformgebung erreicht werden, daß die benötigten Lager- oder Anschlagstellen zur Verfügung stehen. Beispielsweise kann ein Paar dieser Nocken eine Überwurfmutter als vertikalen Anschlag unterstützen, mittels deren eine passend ausgebildete Ventilvorrichtung an den einzelnen Leitungsabschnitt geschraubt ist, sodaß die Höhenlage des Ventils durch den Anschlag der Überwurfmutter an den beiden Nocken genau bestimmt werden kann. Anschließend braucht nur noch die Klemmschraube gegen den einzelnen Leitungsabschnitt festgezogen zu werden, um diese Höhenlage über der Schale zu fixieren.

Im folgenden ist die Erfindung anhand von zwei durch die Zeichnung beispielhaft dargestellten, bevorzugten Ausführungsformen des erfindungsgemässen Tränkebeckens im einzelnen erläutert. Es zeigt:

Fig. 1 einen zentralen, vertikalen Längsschnitt durch eine erste Ausführungsform;

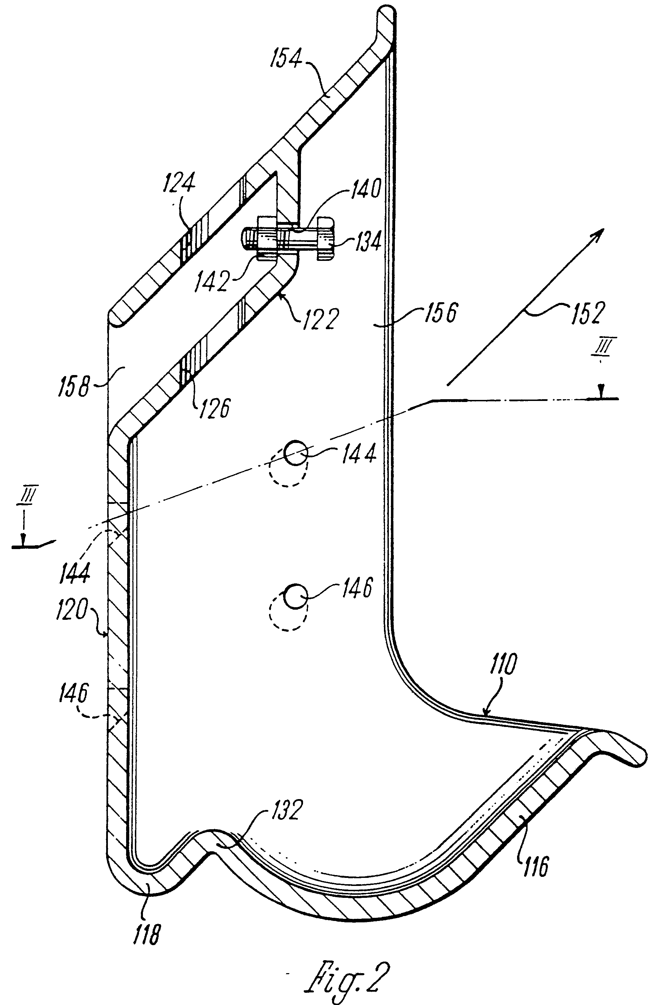

Fig. 2 eine Fig. 1 entsprechende Darstellung einer zweiten Ausführungsform; und

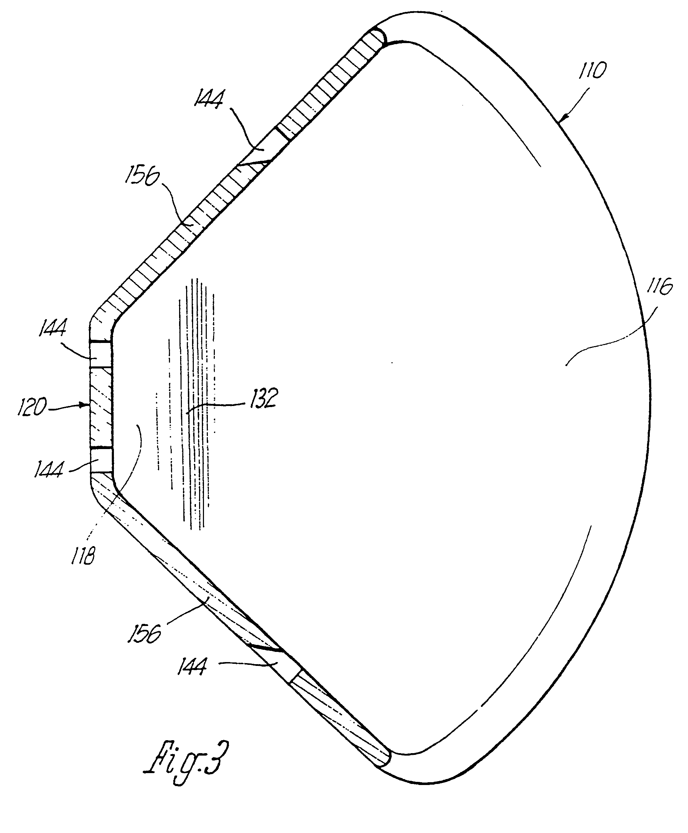

Fig. 3 einen Schnitt nach der Linie III - III in Fig. 2 durch die zweite Ausführungsform.

Die erste Ausführungsform ist ein Tränkebekken 10, das mit einer im Becken hinten angeordneten Ventilvorrichtung 12 und einer dieser Vorrichtung zugeordneten Betätigungsvorrichtung 14 versehen ist.

Das Tränkebecken 10 weist eine sich über seine ganze Breite und den grössten Teil seiner Tiefe erstreckende, ausgerundete Wasserschale 16, eine hinter dieser Schale liegende, ständig unerreichbares Lockwasser enthaltende Rinne 18, eine diese hinten begrenzende, ebene, vertikale Rückwand 20 und einen im Ausführungsbeispiel V-förmigen Ansatz 22 am oberen Rand dieser Wand auf. Der über die Rinne 18 bis über die Wasserschale 16 vorspringende Ansatz 22 ist mit zwei mittig gelegenen, vertikal fluchtenden Bohrungen 24 und 26 versehen, die einen rohrförmigen Stutzen 28 mit leichtem radialem Spiel aufnehmen, dessen unteres, mit einem Aussengewinde versehenes Ende 30 vertikal über der Mitte einer Erhebung 32 des Beckenbodens hängt, welche die Rinne 18 von der Wasserschale 16 abteilt. Der Stutzen 28 ist mittels einer am Ansatz 22 schraubbar festgelegten Schraube 34 am Ansatz 22 festgeklemmt. Das mit einem Aussengewinde versehene obere Ende 36 des vertikalen Stutzens 28 ist mittels einer Schraubmuffe 38 lösbar mit einer vertikalen Wasserzuleitung verbunden zu denken.

Der waagrechte Schaft der Klemmschraube 34 ist frei drehbar in einer waagrechten Bohrung 40 des Ansatzes 22 gelagert sowie in eine in den Ansatz 22 gelegte Vierkantscheibe 42 mit Innengewinde geschraubt. Statt der Scheibe 42 könnte die Bohrung 40 mit einem Innengewinde versehen sein.

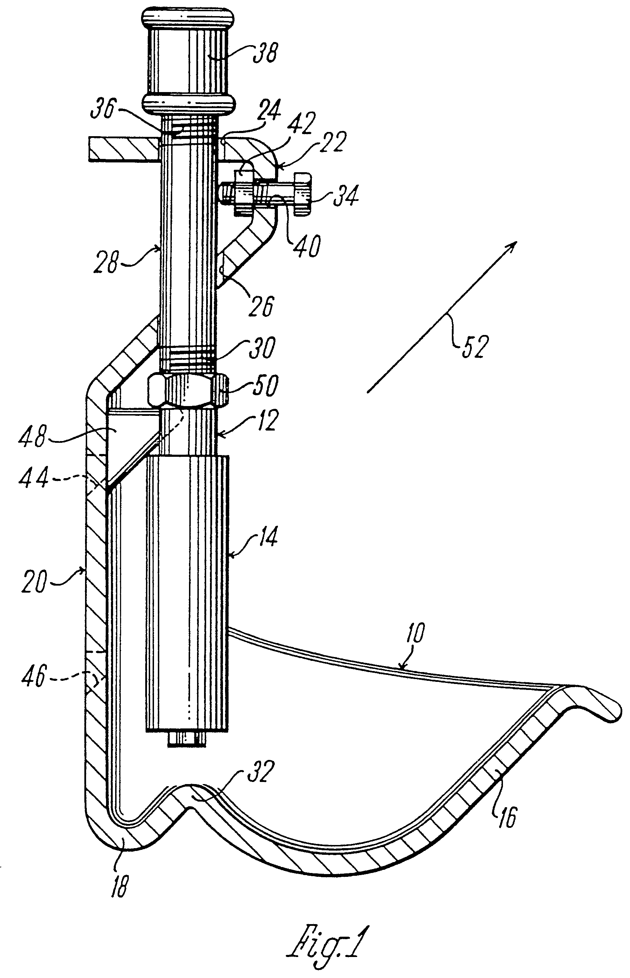

Die Rückwand 20 weist zwei Paar Durchbrüche 44 bzw. 46 auf, die in verschiedenen Höhen über der Rinne 18 angeordnet sind. Durch die Durchbrüche 44 und 46 können die Schäfte von Schrauben gesteckt werden, die zur Befestigung des Beckens, beispielsweise an einer Mauer, dienen. Ausserdem ist die Rückwand 20 mit zwei in gleicher Höhe über der Rinne 18 symmetrisch zur Schnittebene der Fig. 1 parallel angeordneten, hohlen Nocken 48 versehen, die oben waagrecht gegen die Wasserschale 16 vorspringen.

Die Ventilvorrichtung 12 mit anhängender Betätigungsvorrichtung 14 ist mittels einer Überwurfmutter 50 an das untere Stutzenende 30 angeschraubt. Die Überwurfmutter 50 wird auf beiden Seiten der Ventilvorrichtung 12 von den beiden Nocken 48 unterstützt, so dass die Klemmschraube 34 sowie die beiden Bohrungen 24 und 26 das Gewicht der mit dem Becken 10 verbundenen Teile nicht zu halten brauchen. Die beiden Nocken 48 und die Überwurfmutter 50 bestimmen die Höhenlage der Betätigungsvorrichtung 14 über der Erhebung 32 des Beckenbodens.

Das gesamte Tränkebecken 10 ist einstückig aus homogenem Material auf beliebige, geeignete Weise hergestellt. Die Materialstärke ist überall die gleiche, insbesondere weist der Ansatz 22 keine Materialverstärkung auf. Die Wasserschale 16, die Rinne 18, die Durchbrüche 44 und 46 der Rückwand 20, die Nocken 48 an derselben und der Ansatz 22 (ohne die Bohrungen 24, 26 und 40) sind so geformt, dass das Ganze in einer bestimmten, durch den Pfeil 52 angezeigten Richtung entformt, d. h. ohne weiteres einem formgebenden Werkzeug, z. B. einer Giessform, entnommen werden kann. Fig. 1 zeigt dies deutlich und macht auch verständlich, dass die Bohrung 40 schräg statt waagrecht ausgeführt und daher mit ausgeformt anstatt ausgebohrt werden könnte, weil der Schaft der Klemmschraube 34 dank der Mutter 42 lediglich einen Durchbruch im Ansatz 22 für seinen Durchtritt benötigt.

Die Durchbrüche 44 und 46 sind an ihrer Oberseite kreiszylindrisch gerundet, so dass die Rückwand 20 sicher auf den runden Schäften der Befestigungsschrauben ruht.

Die zweite Ausführungsform, deren Teile, soweit sie den Teilen der ersten Ausführungsform gleichen oder entsprechen, mit um 100 höheren Bezugszahlen bezeichnet sind, sei nur hinsichtlich ihrer Abweichungen von der ersten Ausführungsform beschrieben.

Der mittlere, vertikale Längsschnitt des Ansatzes 122 ist im wesentlichen U-förmig, wobei seine beiden Schenkel parallel zur Richtung des Pfeiles 152 liegen. Der obere Schenkel des Ansatzes 22 der ersten Ausführungsform ist also parallel zum unteren Schenkel gelegt worden, und zwar deshalb, weil er eine ungefähr geradlinige Verlängerung 154 erhalten hat, die über die Wasserschale 116 vorspringt. An die Rückwand 120 schliessen unter Bildung eines Innenwinkels von je 135° zwei einen rechten Winkel einschliessende Seitenwände 156 an, die sich von der Wasserschale 116 bis zur Verlängerung 154 erstrecken und den Ansatz 122 je seitlich schliessen, so dass ein Hohlraum 158 entsteht, der über der Rückwand 120 ins Freie mündet. Die beiden Seitenwände 156 gestatten die Befestigung des Tränkebeckens 110 mittels je eines dritten Durchbruches 144 bzw. 146 in einer Raumecke, in der zwei vertikale Mauern rechtwinklig aufeinanderstossen.

Die Nocken 48 der ersten Ausführungsform fehlen beispielsweise bei der zweiten.

## Patentansprüche

1. Tränkebecken für Tiere, mit einer Wasserschale (16; 116), mit einer an diese angeformten, hochgezogenen Rückwand (20; 120) zum Lagern und Befestigen des Beckens (10; 110), und mit einem über der Schale (16; 116) angeordneten, im vertikalen Schnitt V- oder U-förmigen (Fig. 1 bzw. 2) Ansatz (22; 122), der zwei übereinander

## EP 0 043 418 B2

**5**

liegende Schenkel von im wesentlichen konstanter, gleicher Materialstärke aufweist, wobei die Schale (16; 116) sowie die Rückwand (20; 120) und auch der Ansatz (22; 122) mit Hohlraum zwischen seinen beiden Schenkeln so gestaltet sind, daß das Becken (10; 110) samt Rückwand und Ansatz in gerader Richtung von einem formgebenden Teil entformbar ist, dadurch *gekennzeichnet*, daß der an die, mit in derselben Richtung von dem formgebenden Teil entformbaren Befestigungsdurchbrüchen (44, 46; 144, 146) versehene, Rückwand (20; 120) angeformte Ansatz (22; 122) in jedem Schenkel einen von zwei im wesentlichen vertikal fluchtenden, gebohrten Lagerdurchbrüche (24, 26; 124, 126) zur Aufnahme eines rohrförmigen Abschnittes (28) einer ein Sperrventil (12) enthaltenden Wasserzuleitung (38, 28, 12, 14) zum Becken (10; 110) aufweist, wobei dieser Leitungsabschnitt (28) mittels der Lagerdurchbrüche (24, 26; 124, 126) an zwei Ansatzstellen gelagert ist, die gleiche Materialstärke aufweisen; daß eine Klemmschraube (34; 134) quer zur gemeinsamen Achse der beiden Lagerdurchbrüche (24, 26; 124, 126) am Ansatz (22; 122) drehbar gelagert und gegen den aufgenommenen Leitungsabschnitt (28; 128) festziehbar ist; und daß an diesen Leitungsabschnitt (28; 128) das anhängbare Sperrventil (12) unterhalb des Ansatzes (22; 122) angeschraubt ist.

2. Tränkebecken nach Anspruch 1, dadurch gekennzeichnet, daß der Grund der Schale (16; 116) an der Rückwand (20; 120) eine Erhebung (32; 132) aufweist, die auf an sich bekannte Weise eine Rinne (18; 118) für stehendes Lockwasser abteilt, welche so gestaltet ist, daß das Becken geradlinig entformbar ist.

3. Tränkebecken nach Anspruch 1 oder 2, dadurch gekennzeichnet, daß die Lagerstelle für die Klemmschraube (34; 134) gewindelos ist und daß zwischen den Ansatzschenkeln eine am Ansatz (22; 122) befestigte Mutter (42; 142) als Gewindeträger vorgesehen ist.

4. Tränkebecken nach einem der Ansprüche 1 bis 3, dadurch gekennzeichnet, daß der von den Lagerdurchbrüchen (24, 26; 124, 126) aufgenommene Leitungsabschnitt (28) ein Einzelteil ist, das mit einer stationären Wasserzuleitung oberhalb des Ansatzes (22) verschraubbar ist.

5. Tränkebecken nach einem der Ansprüche 1 bis 4, gekennzeichnet durch mindestens einen hohlen Nocken (48), der zur Lagerung des Ventils (12) oder eines Betätigungsorgans desselben an der Rückwand (20) ins Beckeninnere vorspringend ausgebildet ist.

## Claims

1. Animal drinking bowl comprising a water basin (16; 116) having a raised rear wall (20; 120) integrally formed thereon for the mounting and fixing

**6**

of the bowl (10; 110) and an extension piece (22; 122) which is V-shaped or U-shaped in vertical section (Fig. 1 or Fig. 2, respectively) arranged above the basin (16; 116), which extension piece has two arms of substantially constant and equal material thickness arranged one above the other, the basin (16; 116) and rear wall (20; 120) as well as the extension piece (22; 122) with cavity between its two arms being so formed that the bowl (10; 110) together with its rear wall and extension piece can be removed from the mould or the like shape imparting part in a straight direction, characterised in that the extension piece (22; 122) which is integrally formed on the rear wall (20; 120), which rear wall has fixing apertures (44, 46; 144, 146) removable from the mould or shape imparting apparatus in the same direction, is provided in each of its arms with one of two drilled mounting apertures (24, 26; 124, 126) which are in substantially vertical alignment with one another for receiving a tubular portion (28) of a water supply pipe (38, 28, 12, 14) leading to the bowl (10; 110), which water supply pipe contains a stop valve (12), the said portion (28) of the water supply pipe being mounted at two locations of the extension piece of equal material thicknesses by means of mounting apertures (24, 26; 124, 126); in that a clamping screw (34; 134) is rotatably mounted on the extension piece (22; 122) transversely to the common axis of the two mounting apertures (24, 26; 124, 126) and can be tightened against the tubular portion (28; 128) mounted therein; and in that the stop valve (12) designed to be suspended to the tubular portion (28; 128) is screwed to the latter below the extension piece (22; 122).

2. Drinking bowl according to claim 1, characterised in that the bottom of the basin (16; 116) has a raised portion (32; 132) at the vicinity of the rear wall (20; 120), which raised portion separates off in known manner a channel (18; 118) for stationary water which serves as a lure, which channel is so formed that the bowl can be removed from the mould in a straight line.

3. Drinking bowl according to claim 1 or claim 2, characterised in that the mounting part for the clamping screw (34; 134) is without a thread and in that a nut (42; 142) fixed to the extension piece (22; 122) between the arms of the extension piece is provided as the carrier for the thread.

4. Drinking bowl according to one of the claims 1 to 3, characterised in that the tubular portion (28) mounted in the mounting apertures (24, 26; 124, 126) is a single part which can be screwed to a stationary water supply pipe above the extension piece (22).

5. Drinking bowl according to one of the claims 1 to 4, characterised by at least one hollow boss (48) designed to project from the rear wall (20) into the interior of the bowl for the purpose of mounting the valve (12) or an actuating device for the latter.

## Revendications

1. Bassin d'abreuvage pour animaux, comprenant une coupelle à eau (16; 116) qui comporte une paroi arrière relevée (20; 120), façonnée sur celle-ci, pour le montage et la fixation du bassin (10; 110), et un appendice (22; 122) disposé au-dessus de la coupelle (16; 116), et présentant en coupe verticale la forme d'un U ou d'un V (fig. 1 ou 2), cet appendice comportant deux ailes superposées ayant des épaisseurs de matériau identiques et sensiblement constantes, tandis que la coupelle (16; 116) ainsi que la paroi arrière (20; 120), et également l'appendice (22; 122) pourvu d'une cavité entre ses deux ailes, ont une configuration telle que le bassin (10; 110) y compris la paroi arrière et l'appendice, est apte à être mis en forme dans une direction rectiligne au moyen d'un organe de mise en forme, caractérisé en ce que l'appendice (22; 122) façonne sur la paroi arrière (20; 120) pourvue d'ouvertures de fixation (44, 46; 144, 146) mises en forme dans la même direction par l'organe de mise en forme, présente dans chaque aile une ouverture de montage (24, 26; 124, 126) réalisée par perçage et alignée dans une direction sensiblement verticale avec celle de l'autre aile, pour recevoir un tronçon tubulaire (28) d'une conduite d'amenée d'eau (38, 28, 12, 14) contenant un robinet d'arrêt (12) et aboutissant au bassin (10; 110), ce tronçon de conduite (28) étant supporté au moyen des ouvertures de montage (24, 26; 124, 126) en deux endroits de l'appendice qui présentent la même épaisseur de matériau en ce qu'une vis de serrage (34; 134) est montée à rotation sur l'appendice (22; 122), transversalement à l'axe commun des deux ouvertures de montage (24, 26; 124, 126), et est apte à être serrée contre le tronçon de conduite (28; 128) reçu dans celles-ci et en ce qu'à ce tronçon de conduite (28; 128) est vissé, en-dessous de l'appendice (22; 122), le robinet d'arrêt (12) suspendu.

2. Bassin d'abreuvage selon la revendication 1, caractérisé en ce que le fond de la coupelle (16; 116) comporte, près de la paroi arrière (20; 120), un relèvement (32; 132) qui délimite, d'une manière en elle-même connue, une rigole (18; 118) destinée à contenir de l'eau dormante servant d'appât et conformée de telle façon que le bassin soit apte à être mis en forme de manière rectiligne.

3. Bassin d'abreuvage selon la revendication 1 ou 2, caractérisé en ce que le point de montage pour la vis de serrage (34; 134) est dépourvu de filetage, et en ce qu'un écrou (42; 142) fixé à l'appendice (22) entre les ailes de ce dernier est prévu pour servir de support de filetage.

4. Bassin d'abreuvage selon l'une des revendications 1 à 3, caractérisé en ce que le tronçon de conduite (28), reçu dans les ouvertures de montage (24, 26; 124, 126), est constitué d'un seul élément qui est apte à être vissé sur une conduite fixe d'amenée d'eau au-dessus de l'appendice (22).

5. Bassin d'abreuvage selon l'une des revendications 1 à 4, caractérisé par au moins une protubérance creuse (48) qui est conçue de manière à faire saillie à l'intérieur du bassin pour supporter, près de la paroi arrière (20), le robinet (12) ou un organe d'actionnement de celui-ci.

*Fig.1*

*Fig.2*

*Fig.3*